# EUROPEAN PATENT SPECIFICATION

(11) **EP 4 394 236 B1**
(45) Date of publication and mention of the grant of the patent: **27.08.2025**
(21) Application number: 23150004.2
(22) Date of filing: 02.01.2023
(51) Int. Cl.: F17C 13/00, F17C 13/08

(54) **A STORAGE TANK FOR A VEHICLE FOR STORING FLUIDS**
SPEICHERTANK FÜR EIN FAHRZEUG ZUR LAGERUNG VON FLÜSSIGKEITEN
RÉSERVOIR DE STOCKAGE POUR VÉHICULE POUR LE STOCKAGE DE FLUIDES

(43) Date of publication of application: 03.07.2024
(73) Proprietor: VOLVO TRUCK CORPORATION, 405 08 Göteborg (SE)
(72) Inventor: Shetty, Rajendra, 560103 Bangalore (IN); A V, Krishna Kashyap, 560083 Bengaluru (IN)
(74) Representative: Kransell & Wennborg KB

(56) References cited:
- EP-B1- 0 617 672
- EP-B1- 2 212 145
- EP-B1- 3 421 864
- FR-A1- 2 940 398
- US-A1- 2009 071 174

## Description

### TECHNICAL FIELD

The disclosure relates generally to storage tanks for vehicles. In particular aspects, the disclosure relates to a storage tank for a vehicle for storing fluids, and to a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Storage tanks for storing fluids in vehicles may be designed in different ways depending on the specific needs for the vehicle. For example, it is known to design storage tanks for storing diesel, gasoline, liquid natural gas (LNG), washer fluids, etc.

A storage tank may be designed to store more than one fluid by providing sub-volumes in the storage tank.

Even though it is known to provide storage tanks for storing more than one fluid, there is still a strive to develop improved technology relating to storage tanks for storing more than one fluid. A storage tank for vehicles is known from EP 3421864 B1.

### SUMMARY

According to a first aspect of the disclosure, there is provided a storage tank for a vehicle for storing fluids, comprising:
- an inner envelope surface defining an inner volume for storing fluids,
- at least one wall which is releasably attached to the inner envelope surface and defines a fluid barrier for fluid in the inner volume, wherein the inner envelope surface is cylinder-formed and wherein the at least one wall is associated with a radial plane of the cylinder-formed inner envelope surface,

wherein the at least one wall is configured to be moved inside the inner volume to change a volume size of the inner volume and/or to change volume sizes of sub-volumes of the inner volume,
wherein the at least one wall comprises a base plate wall member and a conical plate wall member which are attached to each other, the conical plate wall member having a first convex-shaped side and a second concave-shaped side,
wherein the second concave-shaped side is facing a first wall side of the base plate wall member when the base plate wall member and the conical plate wall member are attached to each other,
wherein the at least one wall is configured to be attached to the inner envelope surface by pressing the conical plate wall member towards the base plate wall member so that the conical plate wall member is expanded in a radial direction thereof. The first aspect of the disclosure may seek to provide a flexible storage tank for fluids in which more than one fluid can be stored in a reliable manner. A technical benefit may include that the at least one wall may be easily moved in the inner volume whilst still enabling a secure and robust attachment to the inner envelope surface in a leak-free manner. By the provision of the first aspect of the disclosure, for example by the configuration of the base plate wall member and the conical plate wall member which are attached to each other, a robust and secure attachment to the inner envelope surface can be achieved. This is achieved in that the conical plate wall member is pressed towards the base plate wall member, thereby enabling the radial expansion of the conical plate wall member. It has been found that this configuration provides a reliable and robust attachment, whilst still enabling for easy adjustment of the wall member in the storage tank.

In some examples, the at least one wall is configured to be released from the inner envelope surface by moving the conical plate wall member in a direction away from the base plate wall member so that an extension of the conical plate wall member in the radial direction is reduced. A technical benefit may include that the at least one wall can thereby be easily released from the inner envelope surface so that it allows the at least one wall member to be moved inside the inner volume.

In some examples, the storage tank further comprises a sealing element attached to a radially outer edge of the at least one wall. A technical benefit may include an improved sealing function between the inner envelope surface and the at least one wall member, e.g., preventing any unwanted leakage of fluids. The sealing element may completely enclose the radially outer edge, i.e. it may enclose a complete perimeter of the at least one wall member.

In some examples, the sealing element is attached to a radially outer edge of the conical plate wall member and/or a radially outer edge of the base plate wall member. The sealing element may completely enclose the radially outer edge of the conical plate wall member and/or the radially outer edge of the base plate wall member.

In some examples, the sealing element comprises a fastening portion which protrudes radially inwardly of the at least one wall and is located in-between the second concave-shaped side and the first wall side when the base plate wall member and the conical plate wall member are attached to each other. A technical benefit may include an improved connection of the sealing element to the at least one wall, reducing e.g. a risk of detachment of the sealing element when moving the at least one wall inside the storage tank.

In some examples, a radially outer edge of the conical plate wall member comprises a cylindrically shaped outer surface facing towards the inner envelope surface. A technical benefit may include a more reliable attachment to the inner envelope surface, e.g., preventing the at least one wall from twisting when it is moved inside the storage tank.

In some examples, the at least one wall further comprises an attachment arrangement for pressing the conical plate wall member towards the base plate wall member.

In some examples, the attachment arrangement comprises at least one of a stud member, a screw member, a nut member, a spring member, such as a compression spring and/or a tension spring.

In some examples, the attachment arrangement is extending through a center point of the at least one wall. A technical benefit may include that it provides more uniform attachment forces for keeping the base plate wall member and the conical wall member pressed together. As such, a more reliable and robust attachment may be obtained.

In some examples, at least one of the at least one wall is an outer wall of the storage tank. A technical benefit may include that it allows the total storage volume of the storage tank to be adjusted.

In some examples, at least one of the at least one wall is a partition wall dividing the inner volume into at least two sub-volumes. A technical benefit may include that it allows sub-volumes of the storage tank to be adjusted.

In some examples, the at least one wall comprises at least one cover for covering a side of the at least one wall, such as one cover on each side of the at least one wall. A technical benefit may include that it prevents the base plate wall member and/or the conical plate wall member from coming into direct contact with any storage fluid. Thereby, the risk of contaminating any storage fluid and/or for damaging the wall members due to unwanted contact with storage fluid may be reduced.

According to a second aspect of the disclosure, there is provided a vehicle comprising a storage tank according to any one of the examples of the first aspect of the disclosure. Advantages and effects of examples of the second aspect of the disclosure are analogous to advantages and effects of the first aspect of the disclosure, and vice versa. It shall also be noted that all examples of the first aspect of the disclosure are applicable to and combinable with all examples of the second aspect of the disclosure, and vice versa.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a side view of a vehicle according to one example.
**FIG. 2a** is a cross-sectional and perspective view of a storage tank according one example.
**FIG. 2b** is a schematic cross-sectional view of a storage tank according to one example.
**FIG. 3** is a cross-sectional view of a wall according to one example.
**FIG. 4** is an enlarged view of a portion of the example shown in FIG. 3.
**FIG. 5** is a further enlarged view of another portion of the example shown in FIG. 3.

The drawings show diagrammatic exemplifying examples of the present disclosure and are thus not necessarily drawn to scale. It shall be understood that the examples shown and described are exemplifying and that the invention is not limited to these examples. It shall also be noted that some details in the drawings may be exaggerated in order to better describe and illustrate the disclosure. Like reference characters refer to like elements throughout the description, unless expressed otherwise.

### DETAILED DESCRIPTION

Aspects set forth below represent the necessary information to enable those skilled in the art to practice the disclosure.

An aim of the present disclosure is to provide a flexible storage tank for fluids which alleviates at least one drawback of the prior art, or which at least provides a suitable alternative. For example, by the provision of the present disclosure, a flexible storage tank for fluids is obtained in which the at least one wall is allowed to be attached to the inner envelope surface in a reliable, robust and facilitated manner. Furthermore, by the provision of the present disclosure, the at least one wall is allowed to be moved inside the inner volume in a reliable and facilitated manner. Still further, the configuration of the storage tank may provide a flexible storage tank in a cost-effective manner.

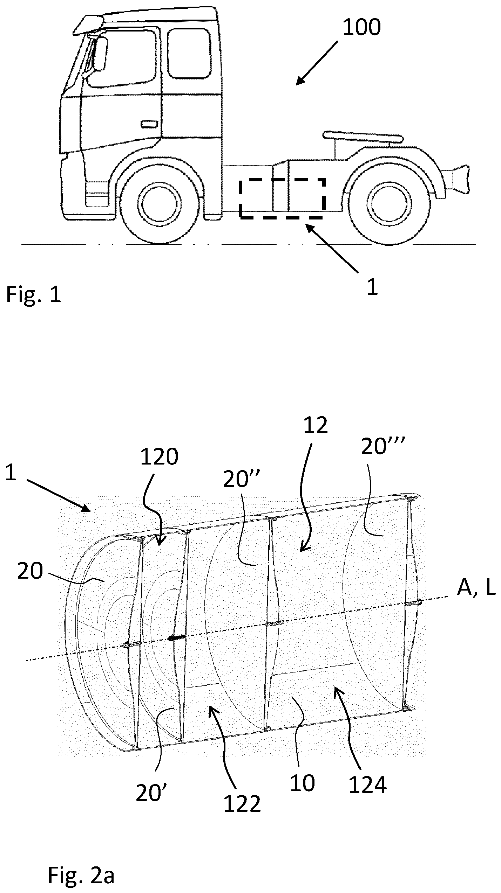

FIG. 1 is a side view of a vehicle 100 according to one example. The example vehicle 100 is herein a truck, more particularly a towing truck for towing one or more trailers (not shown). Even though a truck 100 is shown, in this case a heavy-duty truck, it shall be noted that the present disclosure is not only applicable to trucks, but also to other vehicles, such as buses, construction equipment and passenger cars. The vehicle may also for example be in the form of a vessel, such as a marine vessel. Construction equipment for example comprises dump trucks, wheel loaders, excavators etc.

The vehicle 100 comprises a storage tank 1 for storing fluids. The storage tank 1 may be configured for storing a fuel, such as diesel, gasoline, LNG and hydrogen. The fuel may for example be used by any one of a combustion engine (not shown) and a fuel cell (not shown) for propelling the vehicle 100. The storage tank 1 may additionally or alternatively be used for storing other fluids, such as fluids for an exhaust aftertreatment system (EATS) and washer fluids.

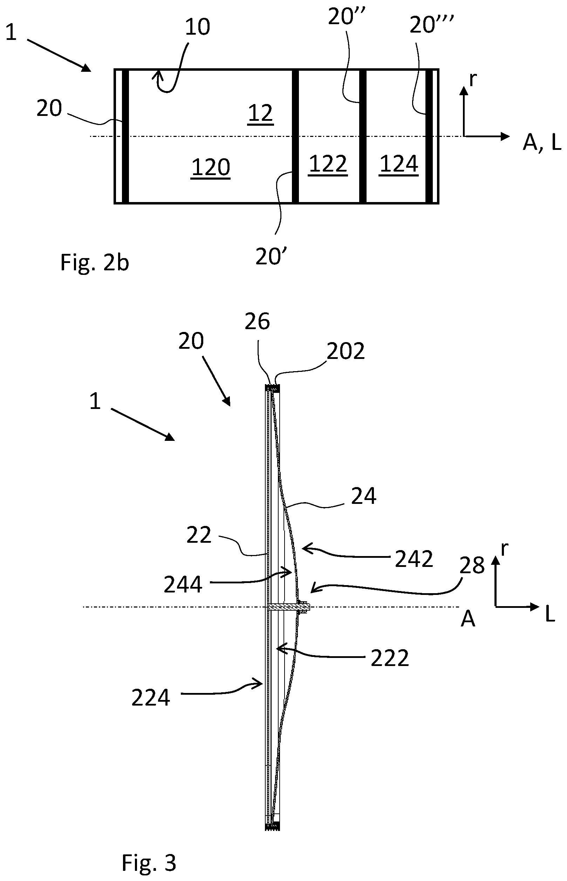

With reference to e.g. FIGS. 2-3, an example of a storage tank 1 for storing fluids will be described. The storage tank 1 may for example be the storage tank 1 as shown in FIG. 1. In FIG. 2a, the storage tank 1 is shown in perspective and cross-sectional view. In FIG. 2b, the storage tank 1 is shown in schematic and cross-sectional view. The cross-sections correspond to a plane which is defined by a center axis A of the storage tank 1 which extends in a longitudinal direction L of the storage tank 1 and by a radial direction r of the storage tank 1 which orthogonally intersects the center axis A.

The storage tank 1 comprises an inner envelope surface 10 defining an inner volume 12 for storing fluids. The storage tank 1 further comprises at least one wall 20, 20', 20", 20‴ which is releasably attached to the inner envelope surface 10 and defines a fluid barrier for fluid in the inner volume 12. In the shown example, there are four walls 20, 20', 20'', 20"'. Accordingly, in the shown example, the storage tank 1 is configured for storing more than one fluid. It shall however be noted that the storage tank 1 may have any number of such walls, for example one, two, three or more walls which are configured according to any one of the examples of the first aspect of the disclosure. FIG. 3 depicts a cross-sectional view of such a wall, in this example the wall 20 shown in FIGS. 2a-b. It shall however be noted that any of the other walls 20', 20", 20‴ may be configured in a similar manner.

The inner envelope surface 10 is cylinder-formed and the at least one wall 20, 20', 20", 20‴ is associated with a radial plane of the cylinder-formed inner envelope surface 10. The cylinder-formed inner envelope surface 10 may for example be a circular cylinder-form, but any other cylinder-form is also applicable, such as with a base which is more square-formed or oval-formed.

The at least one wall 20, 20', 20", 20‴ is configured to be moved inside the inner volume 12 to change a volume size of the inner volume 12 and/or to change volume sizes of sub-volumes 120, 122, 124 of the inner volume 12. The sub-volumes 120, 122, 124 may be used for storing fluids of different kinds. As such, each sub-volume 120, 122, 124 may be associated with a respective opening (not shown) for allowing fluid to be inserted therein and/or to be taken out therefrom.

As may be gleaned from e.g. FIG. 2a and FIG. 3, the at least one wall 20, 20', 20'', 20''' comprises a base plate wall member 22 and a conical plate wall member 24 which are attached to each other. The conical plate wall member 24 has a first convex-shaped side 242 and a second concave-shaped side 244.

The second concave-shaped side 244 is facing a first wall side 222 of the base plate wall member 22 when the base plate wall member 22 and the conical plate wall member 24 are attached to each other. The at least one wall 20, 20', 20", 20‴ is configured to be attached to the inner envelope surface 10 by pressing the conical plate wall member 24 towards the base plate wall member 22 so that the conical plate wall member 24 is expanded in a radial direction r thereof. Accordingly, by way of example, by pressing the conical plate wall member 24 towards the base plate wall member 22, a diameter of the conical plate wall member 24 may be increased, thereby providing an attachment force between the at least one wall 20, 20', 20'', 20''' and the inner envelope surface 10.

The at least one wall 20, 20', 20'', 20''' may be configured to be released from the inner envelope surface 10 by moving the conical plate wall member 24 in a direction away from the base plate wall member 22 so that an extension of the conical plate wall member 24 in the radial direction r is reduced.

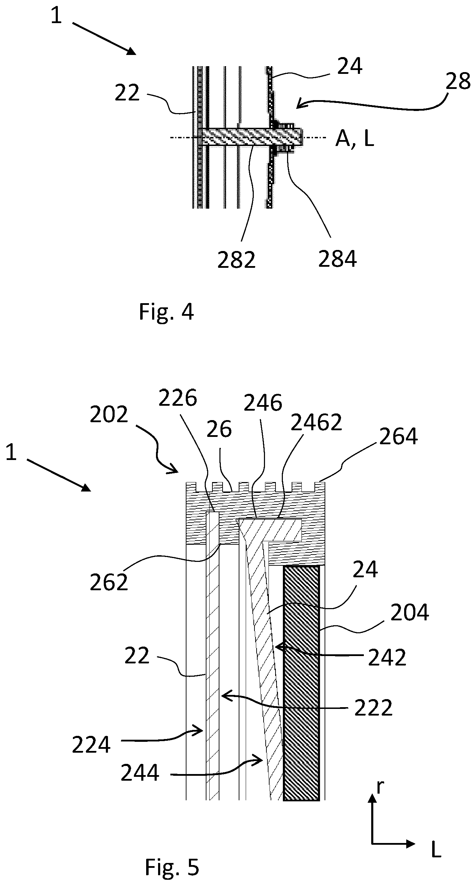

FIGS. 4 and 5 show enlarged views of the wall 20 in FIG. 3. FIG. 4 is an enlarged view of a center portion of the wall 20 and FIG. 5 is an enlarged view of a peripheral portion of the wall 20.

With reference to e.g. FIGS. 3 and 5, it may be gleaned that the storage tank 1 may further comprise a sealing element 26 attached to a radially outer edge 202 of the at least one wall 20, 20', 20'', 20"'. The sealing element 26 may for example be made of rubber or any other suitable polymer, or any combination of different polymers. As shown, the sealing element 26 may comprise one or more sealing lips 264 which is/are configured to contact the inner envelope surface 10.

As shown in FIG. 5, the sealing element 26 may be attached to a radially outer edge 246 of the conical plate wall member 24 and/or a radially outer edge 226 of the base plate wall member 22. In the shown example, the sealing element 26 is attached to the radially outer edge 246 of the conical plate wall member 24 and to the radially outer edge 226 of the base plate wall member 22.

As further shown, the sealing element 26 may comprise a fastening portion 262 which protrudes radially inwardly of the at least one wall 20, 20', 20'', 20''' and is located in-between the second concave-shaped side 244 and the first wall side 222 when the base plate wall member 22 and the conical plate wall member 24 are attached to each other. Thereby, a more robust attachment to the wall 20 may be provided, e.g., preventing the sealing element 26 from being released from the wall 20.

As shown in FIG. 5, the radially outer edge 246 of the conical plate wall member 24 may comprise a cylindrically shaped outer surface 2462 facing towards the inner envelope surface 10. The cylindrically shaped outer surface 2462 extends in the longitudinal direction L, thereby forming an outer peripheral surface 2462 facing the inner envelope surface 10. The cylindrically shaped outer surface 2462 may imply improved stability and attachment interface to the inner envelope surface 10, e.g., reducing the risk of twisting of the wall 20 and/or improving sealing.

With reference to e.g. FIG. 4, it may be gleaned that the at least one wall 20, 20', 20'', 20''' may further comprise an attachment arrangement 28 for pressing the conical plate wall member 24 towards the base plate wall member 22. In the shown example, the attachment arrangement 28 is extending through a center portion, or center point, of the wall 20, i.e. along the center axis A. The attachment arrangement 28 may as shown comprise at least one of a stud member 282 and a nut member 284. Additionally or alternatively, the attachment arrangement 28 may comprise a screw member, a spring member, such as a compression spring and/or a tension spring.

In the shown example, the stud member 282 is welded to the base plate wall member 22, implying a cost-effective and robust attachment.

The stud member 282 comprises threads for receiving the nut member 284, whereby rotating the nut member 284 relative the stud member 282 in one direction presses the conical plate member 24 towards the base plate wall member 22.

The at least one wall 20, 20', 20", 20‴ may be an outer wall 20, 20''' of the storage tank 1. Additionally or alternatively, the at least one wall 20, 20', 20'', 20''' may be a partition wall 20', 20" dividing the inner volume 12 into at least two sub-volumes 120, 122, 124. In the shown example, there are three sub-volumes 120, 122, 124.

As depicted in FIG. 5, the at least one wall 20, 20', 20'', 20''' may comprise at least one cover 204 for covering a side of the at least one wall 20, 20', 20'', 20'''. In the shown example, the cover 204 is covering the convex-shaped side 242 of the conical plate wall member 24. A second cover (not shown) may additionally or alternatively be provided on the other side of the at least one wall 20, 20', 20'', 20''', i.e. outside of the base plate wall member 22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A storage tank (1) for a vehicle (100) for storing fluids, comprising:
- an inner envelope surface (10) defining an inner volume (12) for storing fluids,
- at least one wall (20, 20', 20", 20‴) which is releasably attached to the inner envelope surface (10) and defines a fluid barrier for fluid in the inner volume (12), wherein the inner envelope surface (10) is cylinder-formed and wherein the at least one wall (20, 20', 20", 20‴) is associated with a radial plane of the cylinder-formed inner envelope surface (10),
wherein the at least one wall (20, 20', 20", 20‴) is configured to be moved inside the inner volume (12) to change a volume size of the inner volume (12) and/or to change volume sizes of sub-volumes (120, 122, 124) of the inner volume (12),
wherein the at least one wall (20, 20', 20'', 20''') comprises a base plate wall member (22) and a conical plate wall member (24) which are attached to each other, the conical plate wall member (24) having a first convex-shaped side (242) and a second concave-shaped side (244),
wherein the second concave-shaped side (244) is facing a first wall side (222) of the base plate wall member (22) when the base plate wall member (22) and the conical plate wall member (24) are attached to each other,
wherein the at least one wall (20, 20', 20", 20‴) is configured to be attached to the inner envelope surface (10) by pressing the conical plate wall member (24) towards the base plate wall member (22) so that the conical plate wall member (24) is expanded in a radial direction thereof.

2. The storage tank (1) according to claim 1, wherein the at least one wall (20, 20', 20'', 20''') is configured to be released from the inner envelope surface (10) by moving the conical plate wall member (24) in a direction away from the base plate wall member (22) so that an extension of the conical plate wall member (24) in the radial direction is reduced.

3. The storage tank (1) according to any one of the preceding claims, further comprising a sealing element (26) attached to a radially outer edge (202) of the at least one wall (20, 20', 20", 20''').

4. The storage tank (1) according to claim 3, wherein the sealing element (26) is attached to a radially outer edge (246) of the conical plate wall member (24) and/or a radially outer edge (226) of the base plate wall member (22).

5. The storage tank (1) according to any one of claims 3-4, wherein the sealing element (26) comprises a fastening portion (262) which protrudes radially inwardly of the at least one wall (20, 20', 20", 20‴) and is located in-between the second concave-shaped side (244) and the first wall side (222) when the base plate wall member (22) and the conical plate wall member (24) are attached to each other.

6. The storage tank (1) according to any one of the preceding claims, wherein a radially outer edge (246) of the conical plate wall member (24) comprises a cylindrically shaped outer surface (2462) facing towards the inner envelope surface (10).

7. The storage tank (1) according to any one of the preceding claims, wherein the at least one wall (20, 20', 20'', 20''') further comprises an attachment arrangement (28) for pressing the conical plate wall member (24) towards the base plate wall member (22).

8. The storage tank (1) according to claim 7, wherein the attachment arrangement (28) comprises at least one of a stud member (282), a screw member, a nut member (284), a spring member, such as a compression spring and/or a tension spring.

9. The storage tank (1) according to any one of claims 7-8, wherein the attachment arrangement (28) is extending through a center point of the at least one wall (20, 20', 20'', 20''').

10. The storage tank (1) according to any one of the preceding claims, wherein at least one of the at least one wall (20, 20"') is an outer wall of the storage tank (1).

11. The storage tank (1) according to any one of the preceding claims, wherein at least one of the at least one wall (20', 20'') is a partition wall dividing the inner volume (12) into at least two sub-volumes (120, 122, 124).

12. The storage tank (1) according to any one of the preceding claims, wherein the at least one wall (20, 20', 20", 20‴) comprises at least one cover (204, 206) for covering a side of the at least one wall (20, 20', 20'', 20"'), such as one cover on each side of the at least one wall (20, 20', 20", 20''').

13. A vehicle (100) comprising a storage tank (1) according to any one of the preceding claims.

## Patentansprüche

1. Speichertank (1) für ein Fahrzeug (100) zur Lagerung von Flüssigkeiten, umfassend:
- eine Innenmantelfläche (10), die ein Innenvolumen (12) für die Lagerung von Flüssigkeiten definiert,
- mindestens eine Wand (20, 20', 20", 20‴), die lösbar an der Innenmantelfläche (10) befestigt ist und eine Flüssigkeitsbarriere für Flüssigkeit in dem Innenvolumen (12) definiert, wobei die Innenmantelfläche (10) zylinderförmig ist und wobei die mindestens eine Wand (20, 20', 20", 20‴) mit einer radialen Ebene der zylinderförmigen Innenmantelfläche (10) verbunden ist
wobei die mindestens eine Wand (20, 20', 20", 20‴) so konfiguriert ist, dass sie innerhalb des Innenvolumens (12) bewegt werden kann, um eine Volumengröße des Innenvolumens (12) und/oder Volumengrößen von Teilvolumen (120, 122, 124) des Innenvolumens (12) zu ändern,
wobei die mindestens eine Wand (20, 20', 20", 20‴) ein Grundplattenwandelement (22) und ein konisches Plattenwandelement (24) umfasst, die aneinander befestigt sind, wobei das konische Plattenwandelement (24) eine erste konvexe Seite (242) und eine zweite konkave Seite (244) aufweist,
wobei die zweite konkave Seite (244) einer ersten Wandseite (222) des Grundplattenwandelements (22) zugewandt ist, wenn das Grundplattenwandelement (22) und das konische Plattenwandelement (24) aneinander befestigt sind,
wobei die mindestens eine Wand (20, 20', 20", 20‴) so konfiguriert ist, dass sie an der Innenmantelfläche (10) befestigt wird, indem das konische Plattenwandelement (24) in Richtung des Grundplattenwandelements (22) gedrückt wird, so dass das konische Plattenwandelement (24) in einer radialen Richtung davon erweitert wird.

2. Speichertank (1) nach Anspruch 1, wobei die mindestens eine Wand (20, 20', 20", 20‴) so konfiguriert ist, dass sie von der Innenmantelfläche (10) gelöst wird, indem das konische Plattenwandelement (24) in einer Richtung weg von dem Grundplattenwandelement (22) bewegt wird, so dass eine Ausdehnung des konischen Plattenwandelements (24) in der radialen Richtung verringert wird.

3. Speichertank (1) nach einem der vorhergehenden Ansprüche, ferner umfassend ein Dichtungselement (26), das an einer radial äußeren Kante (202) der mindestens einen Wand (20, 20', 20", 20‴) befestigt ist.

4. Speichertank (1) nach Anspruch 3, wobei das Dichtungselement (26) an einer radial äußeren Kante (246) des konischen Plattenwandelements (24) und/oder einer radial äußeren Kante (226) des Grundplattenwandelements (22) befestigt ist.

5. Speichertank (1) nach einem der Ansprüche 3-4, wobei das Dichtungselement (26) einen Befestigungsabschnitt (262) umfasst, der von der mindestens einen Wand (20, 20', 20", 20‴) radial nach innen vorsteht und zwischen der zweiten konkaven Seite (244) und der ersten Wandseite (222) angeordnet ist, wenn das Grundplattenwandelement (22) und das konische Plattenwandelement (24) aneinander befestigt sind.

6. Speichertank (1) nach einem der vorhergehenden Ansprüche, wobei eine radial äußere Kante (246) des konischen Plattenwandelements (24) eine zylindrische Außenfläche (2462) umfasst, die der Innenmantelfläche (10) zugewandt ist.

7. Speichertank (1) nach einem der vorhergehenden Ansprüche, wobei die mindestens eine Wand (20, 20', 20", 20‴) ferner eine Befestigungsanordnung (28) zum Andrücken des konischen Plattenwandelements (24) an das Grundplattenwandelement (22) umfasst.

8. Speichertank (1) nach Anspruch 7, wobei die Befestigungsanordnung (28) mindestens eines der folgenden Elemente umfasst: ein Bolzenelement (282), ein Schraubenelement, ein Mutterelement (284), ein Federelement, wie eine Druckfeder und/oder eine Zugfeder.

9. Speichertank (1) nach einem der Ansprüche 7-8, wobei die Befestigungsanordnung (28) durch einen Mittelpunkt der mindestens einen Wand (20, 20', 20", 20"') verläuft.

10. Speichertank (1) nach einem der vorhergehenden Ansprüche, wobei mindestens eine der mindestens einen Wand (20, 20‴) eine Außenwand des Speichertanks (1) ist.

11. Speichertank (1) nach einem der vorhergehenden Ansprüche, wobei mindestens eine der mindestens einen Wand (20', 20") eine Trennwand ist, die das Innenvolumen (12) in mindestens zwei Teilvolumen (120, 122, 124) unterteilt.

12. Speichertank (1) nach einem der vorhergehenden Ansprüche, wobei die mindestens eine Wand (20, 20', 20", 20"') mindestens eine Abdeckung (204, 206) zum Abdecken einer Seite der mindestens einen Wand (20, 20', 20", 20'") umfasst, wie beispielsweise eine Abdeckung auf jeder Seite der mindestens einen Wand (20, 20', 20", 20‴).

13. Fahrzeug (100), das einen Speichertank (1) nach einem der vorhergehenden Ansprüche umfasst.

## Revendications

1. Réservoir de stockage (1) pour véhicule (100) destiné à stocker des fluides, comprenant :
- une surface d'enveloppe intérieure (10) définissant un volume intérieur (12) de stockage des fluides,
- au moins une paroi (20, 20', 20", 20"') fixée de manière amovible à la surface d'enveloppe intérieure (10) et définissant une barrière pour le fluide dans le volume intérieur (12), la surface d'enveloppe intérieure (10) étant cylindrique et l'au moins une paroi (20, 20', 20", 20"') étant associée à un plan radial de la surface d'enveloppe intérieure cylindrique (10),
l'au moins une paroi (20, 20', 20", 20"') étant conçue pour être déplacée à l'intérieur du volume intérieur (12) afin de modifier une taille de volume du volume intérieur (12) et/ou de modifier des tailles de volume partiel (12, 122, 124) du volume intérieur (12),
la paroi (20, 20', 20", 20"') comprenant un élément de paroi de plaque de base (22) et un élément de paroi de plaque conique (24) qui sont fixés l'un à l'autre, l'élément de paroi de plaque conique (24) ayant un premier côté convexe (242) et un second côté concave (244),
le second côté concave (244) faisant face à un premier côté de paroi (222) de l'élément de paroi de plaque de base (22) lorsque l'élément de paroi de plaque de base (22) et l'élément de paroi de plaque conique (24) sont fixés l'un à l'autre,
la paroi (20, 20', 20", 20"') étant configurée pour être fixée à la surface d'enveloppe intérieure (10) en pressant l'élément de paroi de plaque conique (24) vers l'élément de paroi de plaque de base (22) de sorte que l'élément de paroi de plaque conique (24) est dilaté dans une direction radiale de celui-ci.

2. Réservoir de stockage (1) selon la revendication 1, dans lequel l'au moins une paroi (20, 20', 20", 20"') est configurée pour être libérée de la surface d'enveloppe intérieure (10) en déplaçant l'élément de paroi de plaque conique (24) dans une direction s'éloignant de l'élément de paroi de plaque de base (22) de sorte qu'une extension de l'élément de paroi de plaque conique (24) dans la direction radiale est réduite.

3. Réservoir de stockage (1) selon l'une quelconque des revendications précédentes, comprenant en outre un élément d'étanchéité (26) fixé à un bord radialement extérieur (202) de la au moins une paroi (20, 20', 20", 20‴).

4. Réservoir de stockage (1) selon la revendication 3, dans lequel l'élément d'étanchéité (26) est fixé à un bord radialement extérieur (246) de l'élément de paroi de plaque conique (24) et/ou à un bord radialement extérieur (226) de l'élément de paroi de plaque de base (22).

5. Réservoir de stockage (1) selon l'une quelconque des revendications 3 à 4, dans lequel l'élément d'étanchéité (26) comprend une partie de fixation (262) qui fait saillie radialement vers l'intérieur de la au moins une paroi (20, 20', 20", 20"') et est située entre le second côté de forme concave (244) et le premier côté de paroi (222) lorsque l'élément de paroi de plaque de base (22) et l'élément de paroi de plaque conique (24) sont fixés l'un à l'autre.

6. Réservoir de stockage (1) selon l'une quelconque des revendications précédentes, dans lequel un bord radialement extérieur (246) de l'élément de paroi de plaque conique (24) comprend une surface extérieure de forme cylindrique (2462) tournée vers la surface d'enveloppe intérieure (10).

7. Réservoir de stockage (1) selon l'une quelconque des revendications précédentes, dans lequel la au moins une paroi (20, 20', 20", 20"') comprend en outre un agencement de fixation (28) pour presser l'élément de paroi de plaque conique (24) vers l'élément de paroi de plaque de base (22).

8. Réservoir de stockage (1) selon la revendication 7, dans lequel l'agencement de fixation (28) comprend au moins un élément parmi un élément de goujon (282), un élément de vis, un élément d'écrou (284), un élément de ressort, tel qu'un ressort de compression et/ou un ressort de tension.

9. Réservoir de stockage (1) selon l'une quelconque des revendications 7 à 8, dans lequel l'agencement de fixation (28) s'étend à travers un point central de l'au moins une paroi (20, 20', 20", 20"').

10. Réservoir de stockage (1) selon l'une quelconque des revendications précédentes, dans lequel au moins l'une de l'au moins une paroi (20, 20"') est une paroi extérieure du réservoir de stockage (1).

11. Réservoir de stockage (1) selon l'une quelconque des revendications précédentes, dans lequel au moins l'une de l'au moins une paroi (20', 20") est une paroi de séparation divisant le volume intérieur (12) en au moins deux sous-volumes (120, 122, 124).

12. Réservoir de stockage (1) selon l'une quelconque des revendications précédentes, dans lequel l'au moins une paroi (20, 20', 20", 20"') comprend au moins un couvercle (204, 206) pour recouvrir un côté de l'au moins une paroi (20, 20', 20", 20"'), tel qu'un couvercle de chaque côté de la au moins une paroi (20, 20', 20", 20"').

13. Véhicule (100) comprenant un réservoir de stockage (1) selon l'une quelconque des revendications précédentes.
